# EUROPEAN PATENT APPLICATION

(11) **EP 3 868 262 A1**
(43) Date of publication of application: **25.08.2021**
(21) Application number: 20382122.8
(22) Date of filing: 20.02.2020
(51) Int. Cl.: A47J 31/44

(54) **MILK FROTHING SYSTEM AND METHOD**

(71) Applicant: Azkoyen, S.A., 31350 Peralta Navarra (ES)
(72) Inventor: LOPEZ RUIZ, Jose, Maria, 31350 PERALTA (Navarra) (ES); SOLA LARRAYA, Jose, Maria, 31350 PERALTA (Navarra) (ES)
(74) Representative: Herrero & Asociados, S.L.

(57) **Abstract**

The milk frothing system comprises a milk container (2); an air inlet (3); a pump (4), where the milk is mixed with the air to produce frothed milk; an outlet (6), where frothed milk is supplied; and means (9) for regulating the milk inflow from the milk container (2).

The milk frothing method comprises feeding milk; feeding air; mixing the milk with the air to produce frothed milk; supplying frothed milk, and also includes the step of regulating the milk inflow.

It is possible to vary the density and therefore the percentage of milk and air in the mixture, thus being able to automatically achieve different types of froth, from the liquid type froth to the froth with a "gel" effect.

## Description

The present invention relates to a system and a method for frothing milk, which is applicable, in particular, to a coffee dispensing machine or a milk frothing machine.

### Background of the invention

The frothing of fresh milk, which can be extrapolated to other liquids with air retention capacity, is obtained from the mixture of milk and air.

Different methods of frothing milk are known, among which the one that is noteworthy is the mixing of air and milk by means of the suction of air thanks to the "Venturi" effect caused by a flow of milk mixed with water vapor, which implies having a system of steam production (usually a pressure boiler).

A drawback of this system is that the steam is at more than 100 °C, and, therefore, can cause burns during handling.

In addition, the steam is compressible, and when heated increases its volume or pressure, depending on the container that contains it, which implies that the system must be subject to specific safety measures and periodic reviews.

Another method for frothing milk is the injection of air into the milk flow by means of a pump that propels the air inside the milk and causes frothing, which implies the existence of an air pump that controls both the quantity and the pressure at which air is propelled into the milk.

Another method of frothing milk is the forced suction of air and milk by means of a propelling pump. This pump creates a low pressure that sucks both milk and air.

Within these systems there are those that are based on the manual adjustment of the air inlet, in order to froth the milk.

There are also systems that allow the air inflow to be changed automatically. For example, document EP 2 275 010 A1 discloses the use of an intermittent valve by means of pulses for the adjustment of the air inlet, which adjusts the opening according to a desired control instruction.

### Description of the invention

Therefore, an objective of the present invention is to provide a milk frothing system and method that allows different types of froth to be achieved automatically.

With the milk frothing system of the invention, the aforementioned drawbacks are solved, presenting other advantages that will be described below.

According to a first aspect, the present invention relates to a milk frothing system, comprising:
- a milk container;
- an air inlet;
- a pump, where the milk is mixed with the air to produce frothed milk; and
- an outlet, where frothed milk is supplied,
wherein the milk frothing system also comprises means for regulating the milk inflow from the milk container.

According to a preferred embodiment, said means for regulating the milk inflow comprise a milk valve.

Advantageously, said milk valve is located before the air inlet.

In addition, the milk frothing system according to the present invention also comprises a throttle arranged at the outlet of said pump, and may also comprise an outlet valve arranged after said pump.

Advantageously, according to a preferred embodiment, said milk valve is a pulse-controlled valve, and said pump is a gear pump.

In addition, the milk frothing system according to the present invention may also comprise a heat exchanger arranged before said frothed milk outlet, and means for controlling the outlet temperature of the frothed milk.

According to a preferred embodiment, said means for controlling the outlet temperature of the frothed milk comprise:
- a controller connected to the pump, which regulates the pump supply voltage;
- a heat exchanger connected to said controller; and
- a temperature sensor, which detects the outlet temperature of the frothed milk at the outlet of said heat exchanger.

According to a second aspect, the present invention also relates to a milk frothing method, which comprises the following steps
- feeding milk;
- feeding air;
- mixing the milk with the air to produce frothed milk; and
- supplying frothed milk,
and it also comprises the step of regulating the milk inflow.

Advantageously, said step of regulating the milk inflow is carried out by means of a pulse-controlled milk valve.

In addition, the milk frothing method according to the present invention may also comprise a step of heating the frothed milk, and a step of regulating the pump supply voltage where the milk is mixed with the air.

The following advantages are achieved with the milk frothing system according to the present invention:
- The air inlet is fixed, and therefore is not subject to changes in the way of working throughout the life of the system.
- By varying the milk inflow, the density and therefore the percentage of milk and air in the mixture can be varied, thus being able to automatically obtain different types of froth, from the liquid type froth to the froth with "gel" effect.
- If it is desired to heat the mixture to obtain hot frothed milk, by means of the use of a heat exchanger as shown in the figure, the outlet temperature of the mixture can be controlled by varying the flow of the incoming milk without having to vary the power of the exchanger. This aspect is important to prevent switching in the operation of the exchanger (limited by regulations).
- It allows changing the percentage of the outlet frothed milk without having to regulate the air inlet, allowing it to be fixed.
- It allows the possibility of heating the mixture, without having to control the on/off of the exchanger.
- Always keeping the exchanger power constant, the setting of the output temperature of the frothed milk is allowed.
- A regulated outlet temperature is obtained regardless of the milk inlet temperature.
- There are no switching or power changes in the exchanger (controlled by regulations).
- It is possible to deliver the output mixture at a continuously regulated temperature, without the need of having any boiler with any preheated fluid.

### Brief description of the drawings

To better understand what has been set forth, some drawings are attached in which, schematically and only by way of non-limiting example, a practical embodiment is represented.
Figures 1 and 2 are block diagrams showing the components of the milk frothing system according to the present invention, according to two possible embodiments; and
Figure 3 is a block diagram of the components of the frothing milk outlet temperature regulation system that can be used in the milk frothing system according to the present invention.

### Description of preferred embodiments

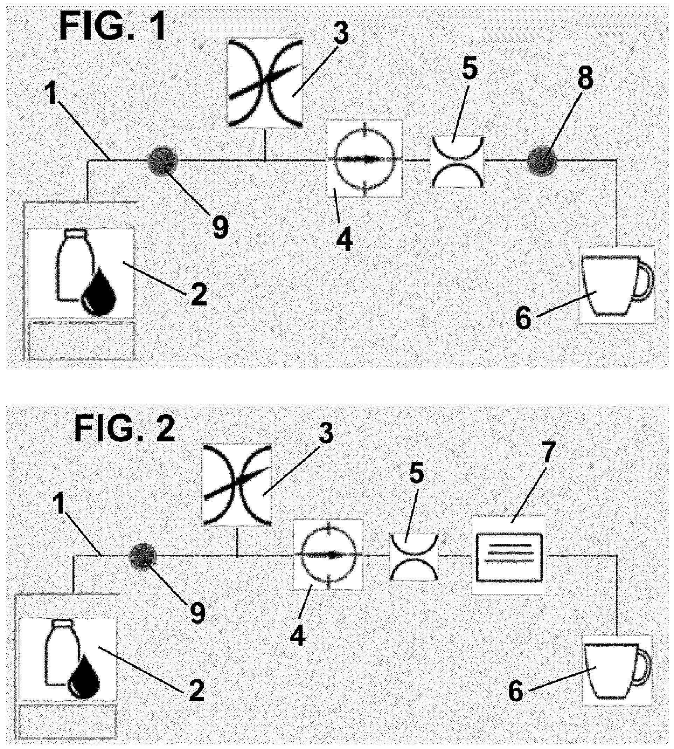

A first embodiment of the milk frothing system according to the present invention is shown in Figure 1.

According to this embodiment, the system comprises a circuit 1 that starts in a milk container 2 from which milk is fed to the circuit 1. In addition, the milk frothing system also comprises an air inlet 3, which feeds air to the circuit 1 for being mixed with the milk, a pump 4, where the mixing of milk and air is produced, a throttle 5 located at the outlet of the pump 4, and an outlet 6, where the frothed milk is provided, for example, to a cup.

In addition, the system also comprises a milk valve 9, for example, a pulse-controlled valve, located at the circuit 1 at the outlet of the milk container 2 and before the air inlet 3.

Said milk valve 9 is used to control or regulate the inflow of milk into the circuit, that is, to control the amount of milk that is mixed with the air, whose inlet is fixed.

According to this embodiment, the system also comprises an outlet valve 8 located after the throttle 5 and before the frothed milk outlet 6.

The operation of the milk frothing system according to the present embodiment is as follows:
Liquid milk and air are sucked by the hydraulic pump 4. The amount of liquid milk, that is, the flow of milk entering the pump 4, is regulated by the milk valve 9, while the amount or flow of air fed to pump 4 is fixed.

Said mixture of milk and air is preferably mixed thanks to internal gears of the hydraulic pump 4.

Because a throttle 5 is arranged at the outlet of the pump 4, the pressure at the outlet of the pump 4 is raised, for example, above 0.3 MPa, in order to overcome the flow restriction. This causes the mixture of air and milk to occur at high pressure, making that the froth production be gel-like.

Immediately after the throttle 5, the mixture of milk and air expands again within circuit 1, producing a milk froth-gel flow at the outlet 6.

The system produces gel-type frothed milk in a stable manner when the high-pressure mixture is performed inside the pump 4, the throttle 5 being located immediately at the outlet of the pump 4.

Milk froth from a physicochemical point of view is a colloid formed by air, water and milk proteins (mainly caseins). This implies that the production of frothed milk is carried out with any type of milk (skimmed, semi-skimmed, whole, lactose free, etc.) as long as the amount of protein is appropriate (between 1% and 6%).

As indicated, it is possible to make a correct frothed milk-gel mixture when it is produced at a pressure greater than 0.3 MPa.

If desired, by changing the pressure at which the mixture is produced, it is possible to adjust the texture of the milk froth, giving it more or less consistency.

This can be achieved by changing the supply voltage of the pump 4 by means of a voltage regulator, which implies a variation of the power and, therefore, a variation of the pressure at which the mixing is performed.

A second embodiment of the milk frothing system according to the present invention is shown in Figure 2. For reasons of simplicity, the description of elements common to the previous embodiment shall not be repeated.

As can be seen, in the embodiment described above the frothing system does not comprise any heat exchanger, so that the production of the milk froth does not need to heat any of the fluids, so that the outlet temperature of the milk froth at the outlet 6 will be the temperature of the incoming milk.

However, if it is desired to obtain hot or cold milk froth, the best way to keep the density and texture is to warm or cool it after it has been produced.

For this, a heat exchanger 7, such as a thermal exchanger, can be incorporated between the throttle 5 and the outlet 6 to the cup.

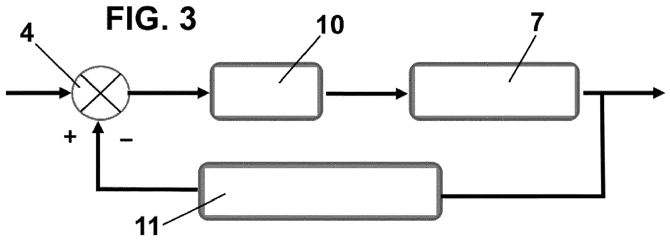

In addition, as shown in Figure 3, the system according to the present invention may also comprise means for regulating the outlet temperature of the frothed milk.

According to the embodiment shown, these temperature regulation means comprise:
- a controller 10 connected to the pump 4, which regulates the supply voltage of the pump 4;
- a heat exchanger 7 connected to said controller 10; and
- a temperature sensor 11, which detects the outlet temperature of the frothed milk at the outlet of said heat exchanger 7.

Since the output mixture temperature depends on the power of the heat exchanger 7 and the amount of liquid flow it heats, the hydraulic pump 4 can be used by varying the operating speed depending on the supply voltage.

Thus, by varying the supply voltage, the flow of liquid that is driven by the pump through the heat exchanger is varied and, therefore, the output temperature is varied.

The control of the output temperature is carried out through the controller 10, which is proportional/integral, which varies the voltage of the pump 4 depending on the desired temperature instruction, which is measured by means of the temperature sensor 11 installed at the heat exchanger outlet 7.

Although reference has been made to specific embodiments of the invention, it is apparent to one skilled in the art that the described milk frothing system is susceptible to numerous variations and modifications, and that all the mentioned details can be substituted by others technically equivalent, without departing from the scope of protection defined by the appended claims.

## Claims

1. Milk frothing system, comprising:
- a milk container (2);
- an air inlet (3);
- a pump (4), where the milk is mixed with the air to produce frothed milk; and
- an outlet (6), where frothed milk is supplied,
**characterized in that** the milk frothing system also comprises means (9) for regulating the milk inflow from the milk container (2).

2. Milk frothing system according to claim 1, wherein said means for regulating the milk inflow comprises a milk valve (9).

3. Milk frothing system according to claim 2, wherein said milk valve (9) is located before the air inlet (3).

4. Milk frothing system according to any one of the preceding claims, which also comprises a throttle (5) arranged at the outlet of said pump (4).

5. Milk frothing system according to any one of the preceding claims, which also comprises an outlet valve (8) arranged after said pump (4).

6. Milk frothing system according to claim 2, wherein said milk valve (9) is a pulse-controlled valve.

7. Milk frothing system according to claim 1, wherein said pump (4) is a gear pump.

8. Milk frothing system according to claim 1, which also comprises a heat exchanger (7) arranged before said frothed milk outlet (6).

9. Milk frothing system according to any one of the preceding claims, which comprises means for controlling the outlet temperature of the frothed milk.

10. Milk frothing system according to claim 9, wherein said means for controlling the outlet temperature of the frothed milk comprise:
- a controller (10) connected to the pump (4), which regulates the supply voltage of the pump (4);
- a heat exchanger (7) connected to said controller (10); and
- a temperature sensor (11), which detects the outlet temperature of the frothed milk at the outlet of said heat exchanger (7).

11. Milk frothing method, which comprises the following steps:
- feeding milk;
- feeding air;
- mixing the milk with the air to produce frothed milk; and
- supplying the frothed milk,
**characterized in that** it also comprises the step of regulating the milk inflow.

12. Milk frothing method according to claim 11, wherein said step of regulating the milk inflow is performed by a pulse-controlled milk valve (9).

13. Milk frothing method according to claim 11, which also comprises a step of heating the frothed milk.

14. Milk frothing method according to claim 11, which also comprises a step of regulating the supply voltage of a pump (4) where the milk is mixed with the air.
